# EUROPÄISCHE PATENTSCHRIFT

(11) **EP 2 195 150 B1**
(45) Veröffentlichungstag und Bekanntmachung des Hinweises auf die Patenterteilung: **05.09.2012**
(21) Anmeldenummer: 08837514.2
(22) Anmeldetag: 01.10.2008
(51) Int. Cl.: B29C 45/36, G01N 21/03

(54) **VERFAHREN UND VORRICHTUNG ZUR HERSTELLUNG EINER KÜVETTE SOWIE DAMIT HERGESTELLTE KÜVETTE**
METHOD AND DEVICE FOR PRODUCING A CUVETTE AND CUVETTE PRODUCED USING SAID METHOD
PROCEDE ET DISPOSITIF DE FABRICATION D'UNE CUVETTE ET CUVETTE AINSI FABRIQUEE

(30) Priorität: 08.10.2007 DE 102007048211
(43) Veröffentlichungstag der Anmeldung: 16.06.2010
(73) Patentinhaber: Sahiri, Thomas, Calabasas, CA 91302 (US)
(72) Erfinder: SCHNEIDER, Werner, 93466 Chamerau (DE)
(74) Vertreter: Maucher, Wolfgang
(86) Internationale Anmeldenummer: PCT/EP2008/008331
(87) Internationale Veröffentlichungsnummer: WO 2009/046924

(56) Entgegenhaltungen:
- EP-A- 0 668 496
- EP-A- 1 215 479
- DE-A1- 19 826 470
- GB-A- 909 555
- JP-A- 8 011 171
- JP-A- 52 057 257
- JP-A- 54 058 761
- SORS L: "SPRITZGIESSWERKZEUG FUER FLUESSIGKEITS-MESSZYLINDER" KUNSTSTOFFE, CARL HANSER VERLAG, MUNCHEN, DE, Bd. 68, Nr. 9, 1. September 1978 (1978-09-01), Seite 523, XP001176451 ISSN: 0023-5563

## Beschreibung

Die Erfindung betrifft ein Verfahren zur Herstellung einer Küvette oder eines Aufnahmegefäßes für flüssige oder gasförmige Medien zur spektroskopischen, qualitativen und/oder quantitativen Analyse oder Vermessung mit einem mittels Strahlung durchstrahlbaren Messbereich oder Messspalt aus Kunststoff durch Spritzgießen, wobei eine mehrteilige Spritzgießform, welche im Inneren die Kontur der Küvette oder des Aufnahmegefäßes mit deren Öffnung und Messspalt aufweist, in einer Spritzgießmaschine mit dem zunächst flüssigen Kunststoff gefüllt wird und wobei nach dem Erstarren des Kunststoffs die Spritzgießform geöffnet und die Küvette entnommen wird, wobei in der Spritzgießform die Innenlängshöhlung und der Messspalt innenseitig durch einen Konturkern gebildet und begrenzt werden, der während des Spritzgießvorganges zunächst von einer Abstützung gehalten wird.

Derartige Küvetten aus Kunststoff, aber auch aus Quarzglas sind in unterschiedlichen Formen und Abmessungen insbesondere bezüglich der Dicke des Messspalts, auch Schichtdicke genannt, bekannt. Beispielsweise kennt man aus DE 198 26 470 A1 eine Kunststoffküvette spezieller Ausbildung mit zwei Paaren einander gegenüberliegender planparalleler Fenster, um unterschiedliche Schichtdicken erreichen zu können. Diese vorbekannte spritzgegossene Kunststoff-Küvette wird unter Verwendung eines Backenwerkzeugs gefertigt, dessen Anspritzpunkt 16 der Spitze des Konturkerns zur Bildung der Innenhöhlung und des Messspalts gegenüberliegt.

Eine möglichst geringe Schichtdicke, also ein Messspalt mit möglichst geringer Dicke, ergibt eine erhebliche Verkürzung des Lichtweges, was für die Genauigkeit der Messung vorteilhaft ist.

Bei aus der Praxis bekannten Quarzküvetten sind Schichtdicken von einem Millimeter und weniger aufgrund der Art der Herstellung möglich, bei Kunststoffküvetten ist jedoch eine Schichtdicke mit weniger als zwei Millimeter bisher nicht herstellbar, so dass entweder die relativ große Schichtdicke in Kauf genommen werden muss oder die sehr teuere Quarzküvette anzuwenden ist, die aber wegen ihrer hohen Fertigungskosten nicht als Einmalartikel geeignet ist.

Es besteht deshalb die Aufgabe, ein Verfahren und eine Vorrichtung zur Herstellung einer Küvette beziehungsweise eines Aufnahmegefäßes der eingangs definierten Art aus Kunststoff zu schaffen, wodurch geringe Fertigungskosten möglich sind, um die Kunststoffküvette auch als Einmalartikel verwenden zu können, die eine geringere Schichtdicke hat und entsprechend gute Messungen erlaubt.

Die Lösung dieser Aufgabe erfolgt mit den Mitteln und Merkmalen der Patentansprüche 1 und 2.

Erfindungsgemäß wird vorgesehen, dass die Dicke des Konturkerns im Bereich des Messspaltes auf einen Millimeter oder weniger begrenzt wird, dass der Konturkern von der Abstützung an seinem die geringste Abmessung aufweisenden Ende gehalten wird und dass der der Öffnung des Gefäßes oder der Küvette abgewandte Abschluss des Messspaltes dadurch gebildet wird, dass die Abstützung während des Spritzgießvorganges von dem Konturkern zurückgezogen wird, wobei die Abstützung zusammen mit dem Ende des Konturkerns die untere Begrenzung oder Fortsetzung der Wände des Messspalts an dessen Ende bildet, und dass der Spritzgießvorgang bei oder nach dem Zurückziehen der Abstützung bis zum Ausfüllen des dadurch freigegebenen Hohlraums fortgesetzt wird, wobei die Abstützung für den den Messspalt ausbildenden Konturkern in Erstreckungsrichtung des Messspalts und quer zu der späteren Orientierung der Strahlen zurückgezogen wird, und dass die als schmales Zwischenstück zwischen den die Außenseite des Gefäßes oder der Küvette bildenden Formteilen angeordnete Abstützung im Trennbereich der beiden Formteile von dem Konturkern zurückgezogen wird, wonach der Spritzgießvorgang beendet wird.

Zwar ist es aus GB 909 555 A, JP 08 011 171 A oder JP 54 058 761 A bekannt, bei zylinderförmigen Kunststoffteilen im Spritzgießverfahren in deren Inneren einen Kern einzufügen und diesen mit einer Abstützung während des Spritzgießvorganges zunächst zu halten, jedoch ist dabei ein runder Querschnitt vorgesehen und der zu spritzende Gegenstand ist in einer Höhlung eines Formteils, also nicht zwischen zwei Formteilen vorgesehen. Die Abstützung des Konturkerns wird mittels Druck, beispielsweise mit Hilfe des Spritzgießdrucks, entfernt.

Mit dem erfindungsgemäßen Verfahren kann eine Kunststoffküvette mit sehr geringer Schichtdicke von einem Millimeter oder weniger hergestellt werden, um die automatische physikalische Verdünnung der Proben durch eine Verkürzung des Lichtwegs zu erreichen. Damit aber der sehr dünne Konturkern von dem in die Form einströmenden Kunststoff nicht verformt oder ausgelenkt wird, wodurch der Messspalt nicht oder in falscher Form oder Stellung entstehen würde, wird der sehr dünne Konturkern zunächst mit einer Abstützung in der gewünschten Lage gehalten, bis genügend Kunststoff beidseits dieses Konturkernes eingeströmt ist, wonach die Abstützung so weit zurückgezogen wird, dass die Begrenzung des Messspalts fertig gegossen werden kann.

Auf diese Weise lässt sich also eine Kunststoffküvette mit sehr geringer Schichtdicke fertigen, so dass die Vorteile der geringen Schichtdicke mit vergleichsweise geringen Fertigungskosten erzielt werden können und die Küvette mit dieser geringen Schichtdicke dennoch als Einmalartikel aus Kunststoff bestehen kann. Je nach verwendetem Kunststoff kann diese Küvette sowohl im sichtbaren als auch im UV-Lichtbereich eingesetzt werden.

Vorteilhaft ist bei dem erfindungsgemäßen Verfahren, dass die Abstützung zusammen mit dem Ende des Konturkerns die untere Fortsetzung der Wandung des Messspalts an dessen Ende - also den unteren Abschluss des Messspaltes - bildet, und dass der Spritzgießvorgang nach dem - begrenzten - Zurückziehen der Abstützung bis zum Ausfüllen des dadurch freigegebenen Hohlraums fortgesetzt wird. Der beim Zurückziehen der Abstützung freigegebene Hohlraum ist dabei aufgrund des Maßes der Zurückziehung und auch der Formgebung der dem Konturkern zugewandten Seite der Abstützung so geformt und gewählt, dass der untere Abschluss des Messspalts oder eine durch die Abstützung zunächst unterbrochene Stelle der Wände des Messspalts ergänzt und ausgefüllt wird.

Dadurch, dass die Abstützung für den den Messspalt ausbildenden Konturkern in Erstreckungsrichtung des Messspalts quer zu der späteren Orientierung der Strahlung wegbewegt oder zurückgezogen wird, kann der Kunststoff bei zunächst noch abgestütztem Konturkern den die späteren Wandungen des Messspalts bildenden Zwischenraum zwischen dem Konturkern und den übrigen Formteilen beidseits des Konturkerns ausfüllen, wodurch dieser nach einem gewissen Füllungsgrad soweit aufgrund seiner eigenen Festigkeit und dem beidseits befindlichen Kunststoff stabilisiert ist, dass bei weiterer Füllung eine Auslenkung des Konturkerns nicht mehr stattfindet. Dann kann die wenigstens eine Abstützung zurückgezogen und dadurch auch der Bereich für das Einfüllen von Kunststoff freigegeben werden, der zunächst von der Abstützung blockiert war und zweckmäßigerweise das untere Ende des Messspalts begrenzt hat und durch die wenigstens eine Abstützung für den Zutritt von Kunststoff gesperrt war.

Die Erfindung betrifft auch eine Vorrichtung zur Herstellung einer Küvette oder eines Aufnahmegefäßes für flüssige oder gasförmige Medien zur spektroskopischen qualitativen und/oder quantitativen Analyse oder Vermessung mit einem durchstrahlbaren Messbereich oder Messspalt aus Kunststoff durch Spritzgießen und ist zur Lösung der vorstehend genannten Aufgabe dadurch gekennzeichnet, dass zu ihr eine mehrteilige Spritzgießform gehört, wobei die Außenkontur der Küvette zwischen zwei Formteilen angeordnet ist und die Innenkontur mit dem Messspalt der Küvette durch einen Konturkern gebildet ist, der zwischen den beiden Formteilen angeordnet ist und einen im Inneren der Spritzgießform befindlichen schmalen Bereich zur Ausbildung des Messspalts hat, welcher Konturkern eine Querschnittsdicke von einem Millimeter oder weniger zuzüglich oder abzüglich von Toleranzen hat, und dass wenigstens eine Abstützung des freien schmalen Endes des Konturkerns innerhalb der Form relativ zu dem Konturkern in Erstreckungsrichtung des schmalen Teils des Konturkerns zurückziehbar angeordnet ist, die während der Füllung der Form mit flüssigem Kunststoff insbesondere um die Wandstärke der Begrenzung des inneren oder unteren Endes des Messspalts oder weniger zurückziehbar ist und dass die Abstützung als kernartiges Zwischenstück zwischen den Formteilen ausgebildet ist und einen Abstand zwischen diesen Formteilen ausfüllt, der benachbart zu dem Abstand der Formteile angeordnet ist, in welchen der Konturkern in Gebrauchstellung eingreift.

Durch eine derartigen im wesentlichen von einer Spritzgießform gebildete Vorrichtung kann die Küvette oder das Aufnahmegefäß mit einem sehr gering bemessenen Messspalt im Spritzgießverfahren hergestellt werden, weil der vor allem den sehr dünnen oder schmalen Messspalt von einem Millimeter Dicke oder weniger ausbildende Konturkern zunächst während des Füllens der Form mit Kunststoff abgestützt und dadurch an ungewollten Verformungen oder Auslenkungen gehindert wird, wobei die Abstützung des Konturkerns eine Doppelfunktion haben, weil sie nach einer gewissen Zeit zurückziehbar ist, wodurch dann die Außenseite des unteren Endes des Messspalts geformt und gebildet wird.

Weil die Abstützung als kernartiges Zwischenstück zwischen den Formteilen ausgebildet ist und einen Abstand zwischen diesen Formteilen ausfüllt, der benachbart zu dem Abstand der Formteile angeordnet ist, in welchen der Konturkern in Gebrauchsstellung eingreift, sind die beiden wesentlichen Formteile der Spritzgießform über die gesamte Ausdehnung des Messspaltes beabstandet, und in diesem Abstand befindet sich einerseits der Konturkern und andererseits auch die Abstützung, wobei die Abstützung diesen Abstand zunächst ausfüllt, so dass sichergestellt ist, dass Kunststoff nur in den Bereich fließen kann, der zwischen dem Konturkern und den Formteilen die Wände des Messspalts bildet.

Die Abstützung des Konturkerns kann an ihrem Stützende eine konkave oder rinnenförmige Vertiefung aufweisen, die beim Abstützen den Rand des Konturkerns aufnimmt oder formschlüssig umgreift und die die Außenkontur der Begrenzungswand des Messspalts an seinem inneren oder unteren Ende ausbildet. Durch eine solche etwa rinnenförmige oder konkave Vertiefung oder Ausnehmung am Stützende der Abstützung kann der Konturkern an seinem eigentlich freien Ende also formschlüssig erfasst und entsprechend sicher festgelegt werden, während der erste größere Teil der Kunststoffmasse in die Form eingefüllt wird. Entsprechend sicher und maßhaltig wird der Konturkern trotz seiner geringen Dicke gehalten. Zusätzlich ergibt sich durch diese Ausbildung der Abstützung ein charakteristisches äußeres Ende der Begrenzung des Messspalts an dessen inneren oder unteren Ende und auch eine ausreichende Dicke dieses Überganges zwischen den beiden Begrenzungswänden des Messspalts.

Dabei ist es zweckmäßig, wenn die Dicke der Abstützung um einen Bruchteil der Stärke der den Messspalt begrenzenden Wände geringer als der Abstand der die Außenseiten der Wände des Messspalts bildenden Formteile oder eines den Bereich des Messspaltes in einem Formteil bildenden Schlitzes ist. Da die Abstützung einen ihr zugehörenden Abstand der Formteile ausbildet, ist also in dem Bereich, in dem sich die Stützvorrichtung zunächst befindet, der Abstand der Formteile etwas geringer als im Bereich des übrigen Konturkerns, wobei dieser Übergang des Abstands im Bereich des Endes des Messspalts angeordnet ist, so dass der zunächst darin eingreifende Abstütz-Kern zusammen mit dem Absatz zwischen diesen etwas unterschiedlich bemessenen Abständen einen Abschluss bildet, durch den kein Kunststoff austreten kann. Da während- des Spritzgießvorganges die Abstützung, also der Abstützkern, so weit zurückgezogen wird, dass der Übergang der beiden den Messspalt begrenzenden Wände ebenfalls mit Kunststoff gefüllt werden kann, ergibt sich auch am Ende des Messspalts ein Abschluss aus Kunststoff, wobei die Zurückziehung der Abstützung etwa der Überlappung des Bereiches des größeren Abstands mit der zunächst noch nicht zurückgezogenen Abstützung entspricht.

Die eingangs definierte Aufgabe und dabei vor allem die Verkürzung des Lichtwegs innerhalb einer Küvette oder eines Aufnahmegefäßes aus Kunststoff wird durch eine mit Hilfe des vorstehend beschriebenen Verfahrens und/oder der vorbeschriebenen Vorrichtung hergestellte Küvette oder ein Aufnahmegefäß für flüssige oder gasförmige Medien zur spektroskopischen qualitativen und/oder quantitativen Analyse oder Vermessung mit einem durchstrahlbaren Messbereich oder Messspalt aus Kunststoff dadurch gelöst, dass die Dicke des Messspalts etwa einen Millimeter zuzüglich oder abzüglich von geringen Toleranzen oder weniger, beispielsweise einen halben Millimeter, beträgt. Kunststoffküvetten mit einem derart gering bemessenen Messspalt haben erhebliche Vorteile bei entsprechenden Messvorgängen aufgrund der physikalischen Verdünnung der untersuchten Proben und können dennoch aufgrund ihrer Fertigung aus Kunststoff als Einmalartikel verwendet werden.

Zweckmäßig ist es dabei, wenn der Messspalt eine sich in Richtung zu seinem der Öffnung der Küvette abgewandten Ende verjüngende Form hat und die Querschnittsdicke, also die Abmessung in Richtung des Messstrahls, von etwa 1,05 Millimeter oder etwa 1,003 auf etwa 0,95 Millimeter oder 0,96 Millimeter oder jeweils einen Zwischenwert zuzüglich oder abzüglich einer Toleranz von etwa fünf Hundertstel Millimeter oder einen halben Millimeter beträgt und von ungefähr 0,52 Millimeter oder 0,517 Millimeter auf 0,45 Millimeter mit einer Toleranz von zweieinhalb Hundertstel Millimeter abnimmt.

Entsprechend kann auch eine Ausgestaltung der erfindungsgemäßen Vorrichtung vorsehen, dass der Konturkern eine mit den vorstehenden Abmessungen versehene geringfügig konische Form hat, um das Entformen nach der Beendigung des Spritzgießvorganges zu erleichtern. Die erwähnten geringfügigen Maßabweichungen im Verlauf des Messspalts beinträchtigen dabei die Messung nicht, weil sie derartig gering sind; dennoch wird das Entformen erleichtert.

Erfindungsgemäß ist also eine Küvette vorgesehen, die hergestellt wird mit einem Verfahren und/oder einer Vorrichtung, wie sie vorstehend erläutert wurden, wobei die Querschnittsdicke des Konturkerns etwa einen Millimeter oder etwa einen halben Millimeter zuzüglich oder abzüglich der schon erwähnten Toleranzen betragen kann.

Vor allem dann, wenn sowohl Küvetten mit einem Messspalt von einem Millimeter Dicke als auch solche mit einem Messspalt von nur einem halben Millimeter Dicke als Küvettensatz vorhanden sind, kann es zweckmäßig sein, wenn an einer Wandung, an einem Flansch oder Rand zur Kennzeichnung unterschiedlicher Spaltweiten des Messspalts unterschiedliche Anzahlen und/oder unterschiedlich geformte geometrische Zeichen, Ritzungen, Kerben, Aussparungen oder Ausnehmungen zur Unterscheidung der unterschiedlich bemessenen Küvetten vorgesehen sind, die beispielsweise von Sensoren, Detektoren oder Tastern eines eine derartige Küvette aufnehmenden Messgeräts erfasst werden können, so dass automatisch bei der Messung die entsprechende Dicke des Messspalts in das Messergebnis eingeht oder eingerechnet werden kann. Diese zweckmäßige Ausgestaltung zur Kennzeichnung unterschiedlicher Küvetten ist in vorteilhafter Weise möglich, weil die Küvetten trotz der geringen Dicke des Messspalts erfindungsgemäß aus Kunststoff hergestellt werden können.

Eine weitere Ausgestaltung kann dabei vorsehen, dass die Zentrumshöhe der Küvette einen halben bis drei Zentimeter, insbesondere dreiviertel Zentimeter bis zweieinhalb Zentimeter, vorzugsweise acht Millimeter bis zwei Zentimeter beträgt. Entsprechend vielseitig können die Küvetten eingesetzt werden, ohne dass Adapter notwendig sind.

Nachstehend sind Ausführungsbeispiele der Erfindung anhand der Zeichnung näher beschrieben. Es zeigt in zum Teil schematisierter Darstellung:
- Fig. 1: eine schaubildliche Seitenansicht einer erfindungsgemäßen Küvette mit spiegelbildlich sichtbarer Beschriftung "1,0" als Hinweis auf eine Messspaltdicke von einem Millimeter,
- Fig. 2: eine Draufsicht der Küvette gemäß Fig. 1,
- Fig. 3: eine Seitenansicht der erfindungsgemäßen Küvette in Blickrichtung des Pfeiles A in Fig. 2,
- Fig. 4: eine um 90° gedrehte Seitenansicht der erfindungsgemäßen Küvette mit Beschriftung "0,5" als Hinweis auf eine Messspaltdicke von 0,5 Millimeter,
- Fig. 5: einen Längsschnitt der Küvette gemäß der Schnittlinie V-V in Fig. 3,
- Fig. 6: einen Längsschnitt der erfindungsgemäßen Küvette quer zu dem Messspalt gemäß der Schnittlinie VI-VI in Fig. 2,
- Fig. 7: einen Querschnitt der Küvette im Bereich des Messspalts gemäß der Schnittlinie VII-VII in Fig. 3,
- Fig. 8: einen der Fig. 7 etwa entsprechenden Querschnitt der Küvette jedoch an einer etwas tieferen Stelle des Messspalts gemäß der Schnittlinie VIII-VIII in Fig. 3,
- Fig. 9: in stärker schematisierter Darstellung einen Längsschnitt durch eine als Spritzgießform aus mehreren Formteilen ausgebildete Vorrichtung zur Herstellung der in den Fig. 1 bis 8 dargestellten Kunststoffküvette, wobei zwischen zwei die Außenwände des Messspalts und deren Fortsetzungen ausbildenden Formteilen ein Konturkern zur Ausbildung der Öffnung und des Inneren der Küvette einschließlich dem Messspalt und eine Abstützung für das Ende dieses Konturkerns vorgesehen sind,
- Fig. 10: eine der Fig. 9 entsprechende Darstellung nach dem Füllen eines Teils des durch die Spritzgießform und den Konturkern gebildeten Hohlraums, wobei die Abstützung noch den Konturkern berührt und abstützt,
- Fig. 11: eine der Fig. 10 entsprechende Darstellung, wobei die Abstützung von dem Ende des Konturkerns etwa um die Dicke des Übergangs zwischen den dem Messspalt begrenzenden Wänden zurückgezogen und dadurch die Verbindung dieser beiden Wände freigegeben ist,
- Fig. 12: eine der Fig. 11 entsprechende Darstellung nach dem vollständigen Füllen des durch das Zurückziehen der Abstützung ebenfalls freigegeben Raumes im Inneren des Spritzgießform mit Kunststoff,
- Fig. 13: den ersten Schritt des Entformens, bei welchem die die Außenseiten der Küvette bildenden Formteile relativ zu den übrigen Teilen der Spritzgießform und insbesondere relativ zu der fertig gestellten Küvette, diese freigebend versetzt sind, indem beispielsweise die die Innenseite der Küvette bildenden Formteile zusammen mit dieser zurückgezogen sind, sowie
- Fig. 14: eine der Fig. 13 entsprechende Darstellung, wobei ein relativ zu dem Konturkern in dessen Erstreckungsrichtung verstellbarer Abstreifer, der zunächst gleichzeitig stirnseitig den Öffnungsrand der Küvette ausgebildet hat, relativ zu dem Konturkern vorwärts bewegt ist und dadurch die fertige Küvette von dem Konturkern abgestreift hat.

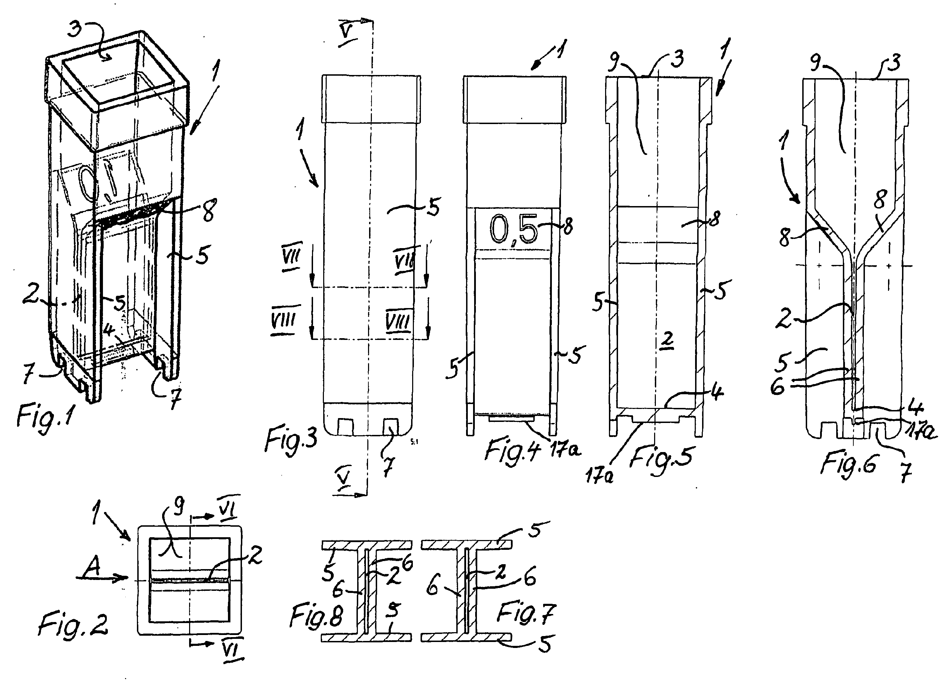

Eine nachstehend, auch bei unterschiedlicher Abmessung des Messspalts, im Ganzen mit 1 bezeichnete Küvette dient in bekannter Weise zur Aufnahme flüssiger oder gasförmiger Medien für spektroskopische quantitative und/oder qualitative Analysen oder Vermessungen und hat dazu einen durchstrahlbaren Messbereich oder Messspalt 2, dessen Dicke gemäß der Beschriftung in Fig. 1 etwa einen Millimeter zuzüglich oder abzüglich von Toleranzen oder weniger, beispielsweise gemäß Fig. 4 einen halben Millimeter zuzüglich oder abzüglich von Toleranzen beträgt.

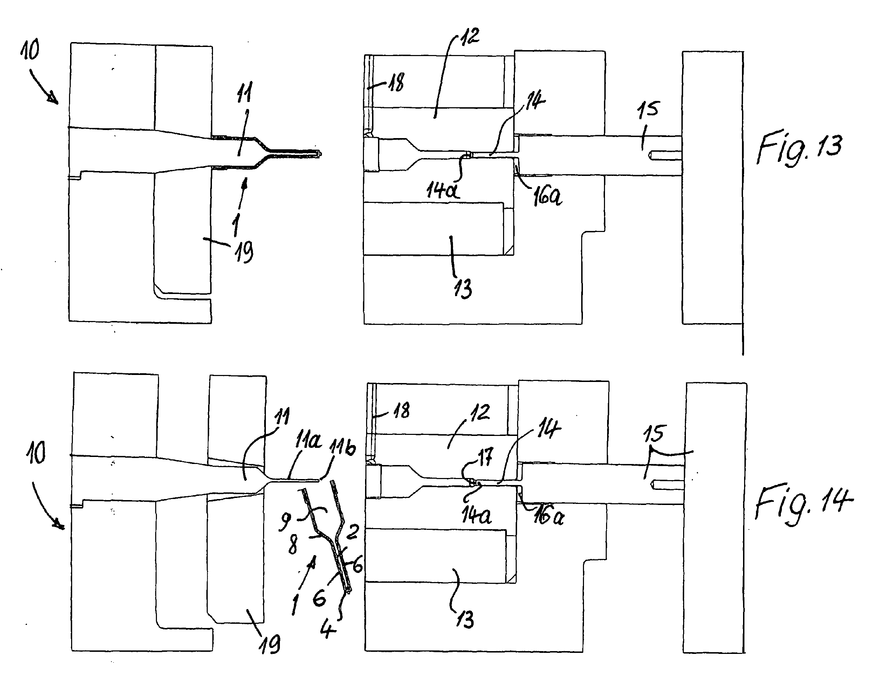

Dabei besteht die Küvette 1 aus Kunststoff, obwohl der Messspalt 2 derart gering bemessen ist. Dabei ist in Fig. 6 bis 8 angedeutet, dass der Messspalt 2 eine sich in Richtung zu einem der Öffnung 3 der Küvette 1 abgewandten Ende 4 verjüngende Form hat, wobei die Querschnittsdicke dieses Messspalts 2 von etwa 1,05 Millimeter oder etwa 1,03 Millimeter auf etwa 0,95 Millimeter oder etwa 0,96 Millimeter oder jeweils einen Zwischenwert zuzüglich oder abzüglich einer Toleranz von etwa fünfhundertstel Millimeter beträgt, wenn es sich um eine Küvette gemäß Fig. 1 mit der Beschriftung "1,0" handelt. Bei einer Küvette 1 mit der Beschriftung "0,5" kann der Messspalt 2 und seine sich verjüngende Form eine Querschnittsdicke von ungefähr 0,52 Millimeter oder 0,517 Millimeter aufweisen, die auf 0,45 Millimeter mit einer Toleranz von zweieinhalbhunderstel Millimeter abnimmt. Diese etwas konische Form des Messspalts 2 erlaubt und erleichtert das Entformen von einem noch zu beschreibenden, in einer zur Herstellung der Küvette 1 dienenden Vorrichtung oder Spritzgießform 10 angeordneten Konturkern 11, was besonders deutlich in Fig. 14 dargestellt ist.

Dabei erkennt man in den Fig. 1, 3 und 6, dass an einer oder zwei Wandungen 5, die quer zur Erstreckung des Messspalts 2 und den diese begrenzenden Wänden 6 angeordnet sind, zur Kennzeichnung unterschiedlicher Spaltweiten oder Abmessungen des Messspalts 2 zum Beispiel unterschiedliche Anzahlen und/oder unterschiedlich geformte geometrische Zeichen, Ritzungen, Kerben, Aussparungen oder Ausnehmungen 7 zur Unterscheidung der unterschiedlich bemessen Küvetten 1 vorgesehen sind. Somit lässt sich die Unterscheidung der Küvetten erleichtern und von Beschriftungen unabhängig machen, so dass auch Sensoren oder sonstige zum Beispiel elektronische oder mechanische Detektoren erkennen können, um welche Küvette 1 mit welcher Abmessung der Spaltweite es sich jeweils handelt.

Dabei erkennt man vor allem in den Fig. 1 und 6 außerdem, dass die Küvette 1 eine große Zentrumshöhe aufweisen kann, was ebenfalls durch die geringfügig konische Form des Messspalts 2 beziehungsweise des diesen formenden und noch zu erläuternden Konturkerns 11 ermöglicht wird. Diese Zentrumshöhe kann einen halben bis drei Zentimeter, insbesondere dreiviertel Zentimeter bis zweieinhalb Zentimeter, vorzugsweise etwa acht Millimeter bis zwei Zentimeter betragen und macht somit die Küvette 1 vielseitig anwendbar.

Vor allem in den Fig. 1, 2 und 6 erkennt man außerdem, dass die den Messspalt 2 begrenzenden Wände 6 über Schrägflächen 8 in einen unterhalb der Öffnung 3 befindlichen etwa kastenförmigen Füllraum 9 übergehen beziehungsweise eine durch die Öffnung 3 eingefüllte und den Füllraum 9 ausfüllende Flüssigkeit über die Schrägflächen 8 durch die Kapillarwirkung der geringen Dicke des Messspalts 2 in diesen gelangt, so dass eine blasenfreie Messung möglich ist.

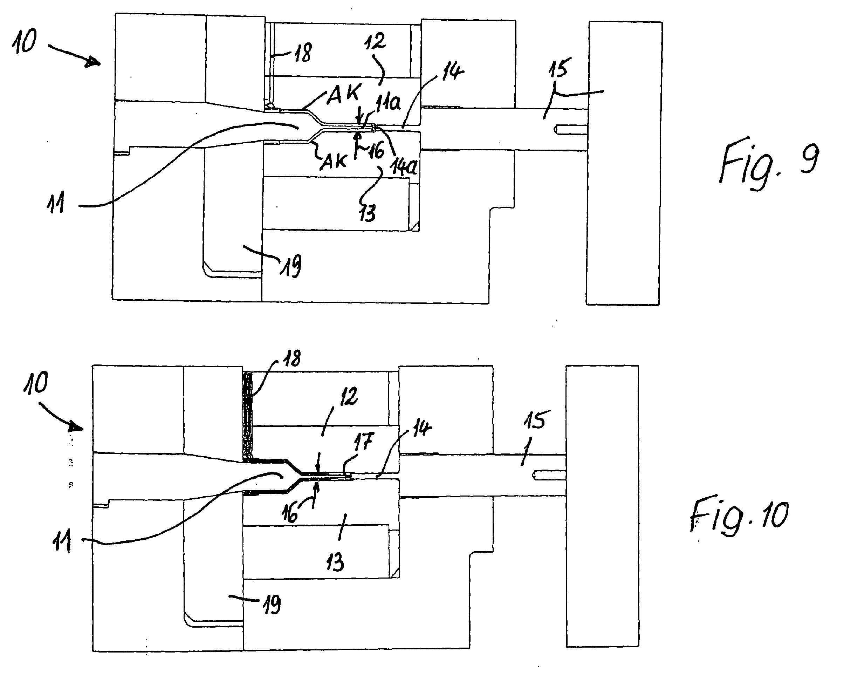

In den Fig. 9 bis 14 ist schematisiert eine Vorrichtung 10 dargestellt, anhand welcher die Herstellung der Küvette 1 nachstehend erläutert ist.

Die Vorrichtung 10 ist eine mehrteilige Spritzgießform, mit welcher die Küvette 1 aus Kunststoff durch Spritzqießen hergestellt werden kann. Dabei erkennt man zunächst in Fig. 9, dass die Außenkontur AK der Küvette 1 zwischen zwei Formteilen 12 und 13 angeordnet und durch diese ausgebildet ist und dass die Innenkontur, also im wesentlichen der Füllraum 9, der Übergang und der Messspalt 2, durch den schon erwähnten Konturkern 11 gebildet sind, wobei dieser Konturkern 11 zwischen den beiden Formteilen 12 und 13 angeordnet ist und einen Abstand 16 einhält, der der Wandstärke der Küvette im Bereich des Füllraumes 9, des Übergangs an den Schrägflächen 8 und des Messspalts 2 entspricht.

Dabei erkennt man vor allem auch in Fig. 14, dass dieser Konturkern 11 einen im Inneren der Spritzgießform 10 befindlichen schmalen Bereich 11a zur Ausbildung des Messspalts 2 hat, welcher Konturkern 11 in diesem schmalen Bereich 11a eine Querschnittsdicke hat, die der Dicke des Messspalts 2 entspricht, also etwa einen Millimeter oder weniger zuzüglich oder abzüglich von Toleranzen beträgt.

Ferner erkennt man in den Fig. 9 bis 14 eine Abstützung 14 mit einer sie tragenden Halterung 15, die gemäß den Fig. 9 und 10 zunächst das freie schmale Ende 11b (vgl. Fig. 14) des Konturkerns 11 an seinem schmalen Bereich 11a innerhalb der Form 10 berührt und festlegt, wobei diese Abstützung 14 gemäß Fig. 9 und 10 etwa bis zu der Stelle reicht, an der bei der fertigen Küvette das Ende 4 des Messspalts 2 angeordnet ist.

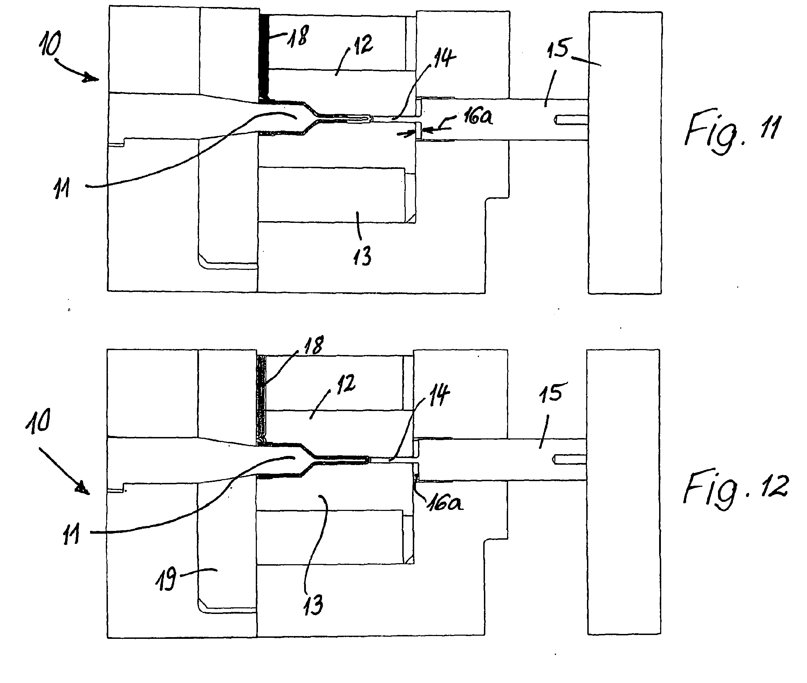

Durch Vergleich der Fig. 9 und 10 mit den Fig. 11 und 12 wird deutlich, dass diese Abstützung 14 innerhalb der Spritzgießform 10 relativ zu dem Konturkern 11 in dessen Erstreckungsrichtung zurückziehbar ist, was in Fig. 11 und 12 auch deutlich durch einen Abstand 16a der Halterung 15 von den Formteilen 12 und 13 sichtbar wird, welcher Abstand 16a bei der Anordnung nach Fig. 9 und 10 vor dieser Rückzugsbewegung noch nicht vorhanden ist.

Dabei erkennt man, dass die Abstützung 14 an ihrem zunächst den schmalen Bereich 11a des Konturkerns 11 erfassenden Stützende 14a eine etwa rinnenförmige Vertiefung 17 aufweist, die bei dem Abstützen des Konturkerns 11 den freien Rand 11b des Konturkerns 11 aufnimmt und formschlüssig erfasst und etwas umgreift und an der fertigen Küvette 1 unter dem Messspalt 2 einen Steg 17a erzeugt.

Somit wird dieser sehr dünn bemessene Bereich 11a des Konturkerns 11 gegen Auslenkungen oder Verformungen durch den einströmenden Kunststoff gesichert, bis dieser Kunststoff nach einer Teilfüllung etwa gemäß Fig. 10 für eine ausreichende Fixierung auch dieses Bereichs des Konturkerns 11 sorgt, so dass dann gemäß Fig. 11 der Konturkern 11 von der Abstützung 14 freigegeben, diese also zurückgezogen werden kann.

Die Stützvorrichtung oder Abstützung 14 ist dabei gemäß den Fig. 9 bis 14 als kernartiges Zwischenstück zwischen den Formteilen 12 und 13 angeordnet und füllt einen zwischen diesen Formteilen 12 und 13 vorhandenen Zwischenraum vollständig aus, wobei dieser Zwischenraum benachbart zu demjenigen Abstand der Formteile 12 und 13 angeordnet ist, in welchen der Konturkern 11 und sein Bereich 11a in Gebrauchsstellung eingreifen.

Die Abstützung 14 befindet sich also in Fortsetzung des Bereichs 11a und kann auch in dieser Richtung zurückgezogen werden.

Dabei erkennt man außerdem, dass die Dicke der Abstützung 14, also der Abstand zwischen den Formteilen 12 und 13 an dieser Stelle, um einen Bruchteil der Stärke der den Massspalt 2 begrenzenden Wände 6 geringer als der Abstand der die Außenseiten der Wände 6 des Messspalts 2 bildenden Formteile 12 und 13 ist. Diesen Dicken-Unterschied kann man gut in den Fig. 9 und 10 erkennen, wo die Abstützung 14 noch etwas in diesen größeren Abstand 16 zwischen den Formteilen 12 und 13 eingreift, aus welchem sie dann später zurückgezogen wird.

Dabei ist in den Figuren angedeutet, dass die Dicke der Abstützung 14, also der Abstand der Formteile 12 und 13 im Bereich dieser Abstützung 14, um zwei halbe Wandstärken der den Messspalt 2 begrenzenden Wände 6 geringer als die Gesamtdicke des Messspaltes 2 mit seinen beiden Wänden 6 ist. Ferner erkennt man, dass die Längsmitte der Abstützung 14 mit der des Konturkerns 11 und damit mit der Längsmitte des Messspalts 2 fluchtet beziehungsweise übereinstimmt, so dass also die Abstützung 14 im Berührbereich an dem Konturkern 11 beidseits noch einen Freiraum von jeweils einer halben Dicke einer Wand 6 hat. Um diesen Überlappungsbereich wird die Abstützung 14 gemäß Fig. 11 im Verlauf des Verfahrens zur Herstellung der Küvette 1 zurückgezogen, so dass sie dann im Bereich des Endes 4 einen hohlen Übergang zwischen den Wänden 6 zur Begrenzung des Messspalts 2 freigibt, der gemäß Fig. 12 nach dieser Rückzugsbewegung der Abstützung 14 ebenfalls mit Kunststoff ausgefüllt werden kann.

Zunächst wird also bei der Herstellung der Küvette 1 aus Kunststoff innerhalb der Spritzgießform 10 der Konturkern 11 an seinem Ende 11b mit der Abstützung 14 gegen Auslenkungen gehalten und Kunststoff durch einen Zuführkanal 18 eingespritzt. Nachdem der Kunststoff einen großen Teil der Küvette gebildet hat, ein Restbereich der Wände 6 für den Messspalt 2 aber noch frei von Kunststoff ist, wird die Abstützung 14 um einen geringen Betrag zurückgezogen, um den Übergang der beiden Wände 6 freizugeben, der dann ebenfalls mit Kunststoff ausgefüllt wird.

Nach dem Erstarren kann dann ein Teil der Spritzgießform 10 mit den Formteilen 12 und 13 gemäß Fig. 13 zurückgezogen werden, oder umgekehrt kann der andere einen Abstreifer 19 enthaltende Teil der Spritzgießform 10 zurückbewegt werden, wonach nun die Küvette 1 von außen her frei ist, von innen aber noch auf dem Konturkern 11 angeordnet bleibt.

Gemäß Fig. 14 wird sie von diesem Konturkern 11 mit Hilfe eines relativ zu dem Konturkern 11 verstellbaren Abstreifer 19 abgestreift, der gleichzeitig zunächst den stirnseitigen Öffnungsbereich oder Öffnungsrand der Küvette 1 ausbildet.

Die beiden Formteile 12 und 13 können aber auch durch ein einziges Formteil gebildet sein, in welches die Außenkontur (AK) der Küvette 1 von einer Seite her eingearbeitet ist. In diesem Falle ist die Abstützung 14 in einem entsprechenden Schlitz eines solchen, die Küvettenkontur enthaltenden Formteils untergebracht, so dass also die Gesamtanordnung der in den Figuren dargestellten Anordnung in gleicher Weise entspricht und das Herstellungsverfahren der Küvette in der vorbeschriebenen Weise durchgeführt werden kann, weil die Abstützung 14 dann in diesem die Küvettenkontur fortsetzenden Schlitz in entsprechender Weise zurückgezogen werden kann.

Aufgrund der Herstellung der Küvette 1 aus Kunststoff können auch die schon erwähnten Ausnehmungen 7 zur Kennzeichnung und Unterscheidung der unterschiedlich bemessenen Küvetten 1 auf einfache Weise gleich bei dem Spritzgießvorgang angebracht werden.

Zur Herstellung einer Küvette 1 oder eines Aufnahmegefäßes für flüssige oder gasförmige Medien zur spektroskopischen, qualitativen und/oder quantitativen Analyse oder Vermessung mit einem mittels Strahlung durchstrahlbaren Messbereich oder Messspalt 2 aus Kunststoff durch Spritzen ist eine mehrteilige Spritzgießform 10 vorgesehen, die die Konturen der herzustellenden Küvette 1 enthält und in einer Spritzgießmaschine mit dem zunächst flüssigem Kunststoff gefüllt wird. Dabei wird in der Spritzgießform 10 die Innenhöhlung beziehungsweise der Füllraum 9 und der Messspalt 2 innenseitig durch einen Konturkern 11 gebildet und begrenzt, wobei die Dicke dieses Konturkerns 11 in dem Bereich 11a, womit der Messspalt 2 hergestellt wird, auf etwa ein Millimeter oder weniger begrenzt ist. An seinem die geringste Abmessung aufweisenden Rand oder Ende 11b wird der Konturkern 11 und sein dünner Bereich 11a während des Spritzgießvorgangs zunächst mit Hilfe wenigstens einer Abstützung 14 gehalten und der der Öffnung 3 der Küvette 1 abgewandte Abschluss des Messspaltes 2, also sein Ende 4, dadurch gebildet, dass die wenigstens eine Abstützung 14 während des Spritzgießvorganges nach einer teilweisen Füllung der Form mit Kunststoff so weit zurückgezogen wird, dass sie zusammen mit dem Ende 11b des Konturkerns 11 die untere Fortsetzung der Wände des Messspalts 2 bildet. Nach dieser Rückzugsbewegung oder schon während des Zurückziehens der wenigstens einen Abstützung 14 wird der Spritzgießvorgang bis zum Ausfüllen des gesamten Hohlraums innerhalb der Spritzgießform 10 fortgesetzt, so dass nach dem Erstarren dann die vollständige Küvette entformt werden kann.

## Patentansprüche

1. Verfahren zur Herstellung einer Küvette (1) oder eines Aufnahmegefäßes für flüssige oder gasförmige Medien zur spektroskopischen, qualitativen und/oder quantitativen Analyse oder Vermessung mit einem mittels Strahlung durchstrahlbaren Messbereich oder Messspalt (2) aus Kunststoff durch Spritzgießen, wobei eine mehrteilige Spritzgießform (10), welche im Inneren die Kontur der Küvette (1) oder des Aufnahmegefäßes mit deren Öffnung (3) und Messspalt (2) aufweist, in einer Spritzgießmaschine mit dem zunächst flüssigen Kunststoff gefüllt wird und wobei nach dem Erstarren des Kunststoffs die Spritzgießform (10) geöffnet und die Küvette entnommen wird, wobei in der Spritzgießform (10) die Innenlängshöhlung (9) und der Messspalt (2) innenseitig durch einen Konturkern (11) gebildet und begrenzt werden, der während des Spritzgießvorgangs zunächst von einer Abstützung (14) gehalten wird, **dadurch gekennzeichnet, dass** die Dicke des Konturkerns (11) im Bereich (11a) des Messspaltes (2) auf 1 Millimeter oder weniger begrenzt wird, dass der Konturkern (11) von der Abstützung (14) an seinem die geringste Abmessung aufweisenden Ende gehalten wird und dass der der Öffnung (3) des Gefäßes oder der Küvette (1) abgewandte Abschluss des Messspaltes (2) dadurch gebildet wird, dass die Abstützung (14) während des Spritzgießvorganges von dem Konturkern (11) zurückgezogen wird, wobei die Abstützung (14) zusammen mit dem Ende (11b) des Konturkerns (11) die untere Begrenzung oder Fortsetzung der Wände (6) des Messspalts (2) an dessen Ende (4) bildet, und dass der Spritzgießvorgang bei oder nach dem Zurückziehen der Abstützung (14) bis zum Ausfüllen des dadurch freigegebenen Hohlraums fortgesetzt wird, wobei die Abstützung (14) für den den Messspalt (2) ausbildenden Konturkern (11) in Erstreckungsrichtung des Messspalts (2) quer zu der späteren Orientierung der Strahlung zurückgezogen wird, und dass die als schmales Zwischenstück zwischen den die Außenseite des Gefäßes oder der Küvette (1) bildenden Formteilen (12, 13) angeordnete Abstützung (14) im Trennbereich der beiden Formteile (12, 13) von dem Konturkern (11) zurückgezogen wird, wonach der Spritzgießvorgang beendet wird.

2. Vorrichtung zur Herstellung einer Küvette (1) oder eines Aufnahmegefäßes für flüssige oder gasförmige Medien zur spektroskopischen qualitativen und/oder quantitativen Analyse oder Vermessung mit einem durchstrahlbaren Messbereich oder Messspalt aus Kunststoff durch Spritzgießen, wobei eine mehrteilige Spritzgießform vorgesehen ist, die Außenkontur (AK) der Küvette (1) zwischen zwei Formteilen (12, 13) angeordnet ist und die Innenkontur durch einen Konturkern (11) gebildet ist, der zwischen den beiden Formteilen (12, 13) angeordnet ist und einen im Inneren der Spritzgießform (10) befindlichen schmalen Bereich (11a) zur Ausbildung des Messspalts (2) hat, **dadurch gekennzeichnet, dass** der Konturkern (11) eine Querschnittsdicke von einem Millimeter oder weniger zuzüglich oder abzüglich von Toleranzen hat, und dass wenigstens eine Abstützung (14) des freien schmalen Endes (11b) des Konturkerns (11) innerhalb der Spritzgießform (10) relativ zu dem Konturkern (11) in Erstreckungsrichtung des schmalen Teils (11a) des Konturkerns (11) zurückziehbar angeordnet ist, die während der Füllung der Spritzgießform (10) insbesondere um die Wandstärke der Begrenzung des inneren oder unteren Endes des Messspalts (2) oder weniger zurückziehbar ist und dass die Abstützung (14) als kernartiges Zwischenstück zwischen den Formteilen (12, 13) ausgebildet ist und einen Abstand zwischen diesen Formteilen (12, 13) ausfüllt, der benachbart zu dem Abstand (16) der Formteile (12, 13) angeordnet ist, in welchen der Konturkern (11) in Gebrauchsstellung eingreift, und dass die Abstützung(en) (14) des Konturkerns (11) an ihrem Stützende (14a) eine konkave oder nutenförmige oder rinnenförmige Vertiefung (17) aufweist, die beim Abstützen den Rand, also das Ende (11b) des Konturkerns (11) aufnimmt oder formschlüssig umgreift und die die Außenkontur der Begrenzungswand des Messspalts (2) an seinem inneren oder unteren Ende (4) ausbildet.

3. Vorrichtung nach Anspruch 2, **dadurch gekennzeichnet, dass** die Dicke der Abstützung (14) um einen Bruchteil der Stärke der den Messspalt (2) begrenzenden Wände (6) geringer als der Abstand der die Außenseiten der Wände (6) des Messspalts (2) bildenden Formteile (12, 13) ist.

4. Vorrichtung nach Anspruch 2 oder 3, **dadurch gekennzeichnet, dass** die Dicke der Abstützung (14) um zwei halbe Wandstärken der dem Messspalt (2) begrenzenden Wände (6) geringer als die Gesamtdicke des Messspaltes (2) mit seinen Wänden (6) ist und dass die Längsmitte der Abstützung (14) mit der des Konturkerns (11) und damit mit der Längsmitte des Messspaltes (2) fluchtet oder übereinstimmt.

5. Küvette oder Aufnahmegefäß für flüssige oder gasförmige Medien zur spektroskopischen, qualitativen und/oder quantitativen Analyse oder Vermessung mit einem durchstrahlbaren Messbereich oder Messspalt (2) aus Kunststoff hergestellt mit einem Verfahren gemäß Patentanspruch 1 oder mit einer Vorrichtung gemäß den Ansprüchen 2 bis 4, **dadurch gekennzeichnet, dass** die Dicke des Messspalts (2) in Strahlrichtung etwa einen Millimeter zuzüglich oder abzüglich von Toleranzen oder weniger beträgt.

6. Küvette nach Anspruch 5, **dadurch gekennzeichnet, dass** der Messspalt (2) eine sich in Richtung zu einem der Öffnung (3) abgewandten Ende (4) verjüngende Form hat und die Querschnittsdicke von etwa 1,05 Millimeter oder etwa 1,03 Millimeter auf etwa 0,95 Millimeter oder 0,96 Millimeter oder jeweils einen Zwischenwert zuzüglich oder abzüglich einer Toleranz von etwa fünf Hundertstel Millimeter oder etwa einen halben Millimeter beträgt und von ungefähr 0,52 Millimeter oder 0,517 Millimeter auf 0,45 Millimeter mit einer Toleranz von zweieinhalb Hundertstel Millimeter abnimmt.

7. Küvette nach einem der vorstehenden Ansprüche, **dadurch gekennzeichnet, dass** an einer Wandung (5), an einem Flansch oder Rand zur Kennzeichnung unterschiedlicher Spaltweiten des Messspalts (2) unterschiedliche Anzahlen und/oder unterschiedlich geformte geometrische Zeichen, Ritzungen, Kerben, Aussparungen oder Ausnehmungen (7) zur Unterscheidung der unterschiedlich bemessenen Küvetten (1) vorgesehen sind.

8. Küvette nach einem der Ansprüche 5 bis 7, **dadurch gekennzeichnet, dass** die Zentrumshöhe der Küvette (1) einen halben bis drei Zentimeter, insbesondere dreiviertel Zentimeter bis zweieinhalb Zentimeter, vorzugsweise acht Millimeter bis zwei Zentimeter, beträgt.

## Claims

1. Method for producing a cuvette (1) or a receiving vessel for liquid or gaseous media for spectroscopic, qualitative and/or quantitative analysis or measurement, with a measuring region or measuring gap (2) penetrable by radiation, made of plastics by injection moulding, wherein a multi-part injection mould (10) which comprises on the inside the contour of the cuvette (1) or of the receiving vessel with its opening (3) and measuring gap (2), is filled with the initially liquid plastics in an injection moulding machine and after the hardening of the plastics the injection mould (10) is opened and the cuvette is taken out, while in the injection mould (10) the internal longitudinal cavity (9) and the measuring gap (2) are formed and delimited on the inside by a contour core (11), which is initially held by a support (14) during the injection moulding process, **characterised in that** the thickness of the contour core (11) in the region (11a) of the measuring gap (2) is limited to 1 millimetre or less, **in that** the contour core (11) is held by the support (14) at its end that has the smallest dimensions, and **in that** the closure of the measuring gap (2) that is remote from the opening (3) of the vessel or the cuvette (1) is formed by the fact that the support (14) is withdrawn from the contour core (11) during the injection moulding process, the support (14) forming, together with the end (11b) of the contour core (11), the lower boundary or continuation of the walls (6) of the measuring gap (2) at the end (4) thereof, and **in that** the injection moulding process is continued during or after the withdrawal of the support (14) until the cavity thus opened up is filled, while the support (14) for the contour core (11) that forms the measuring gap (2) is withdrawn transversely to the later orientation of the radiation, in the direction of extent of the measuring gap, and **in that** the support (14) disposed as a narrow intermediate piece between the moulding parts (12, 13) that form the outside of the vessel or the cuvette (1) is withdrawn from the contour core (11) in the region of separation of the two moulding parts (12, 13), after which the injection moulding process is ended.

2. Device for producing a cuvette (1) or a receiving vessel for liquid or gaseous media for spectroscopic, qualitative and/or quantitative analysis or measurement, with a measuring region or measuring gap penetrable by radiation, made of plastics by injection moulding, wherein a multi-part injection mould is provided, the outer contour (AK) of the cuvette (1) is disposed between two moulding parts (12, 13) and the inner contour is formed by a contour core (11) which is arranged between the two moulding parts (12, 13) and has a narrow region (11a) for forming the measuring gap (2), located inside the injection mould (10), **characterised in that** the contour core (11) has a cross-sectional thickness of one millimetre or less, plus or minus some tolerances, and **in that** at least one support (14) for the free narrow end (11 b) of the contour core (11) within the injection mould (10) is arranged to be retractable relative to the contour core (11) in the direction of extent of the narrow part (11 a) of the contour core (11), said support being retractable during the filling of the injection mould (10) in particular by the wall thickness of the boundary of the inner or lower end of the measuring gap (2) or less, and **in that** the support (14) is embodied as a core-like intermediate piece between the moulding parts (12, 13) and fills a gap between these moulding parts (12, 13) which is disposed adjacent to the spacing (16) of the moulding parts (12, 13) into which the contour core (11) engages in the position of use, and **in that** the support(s) (14) of the contour core (11) at its (their) support end (14a) has (have) a concave or groove-like or channel-like depression (17) which during the supporting action accommodate the edge, i.e. the end (11b) of the contour core (11), or interlockingly surround it, and which forms the outer contour of the boundary wall of the measuring gap (2) at its inner or lower end (4).

3. Device according to claim 2, **characterised in that** the thickness of the support (14) is less than the spacing of the moulding parts (12, 13) that form the outsides of the walls (6) of the measuring gap (2), by a fraction of the thickness of the walls (6) that bound the measuring gap (2).

4. Device according to claim 2 or 3, **characterised in that** the thickness of the support (14) is less than the total thickness of the measuring gap (2) with its walls (6) by two half wall thicknesses of the walls (6) that delimit the measuring gap (2) and **in that** the longitudinal centre of the support (14) is aligned with or coincides with that of the contour core (11) and hence with the longitudinal centre of the measuring gap (2).

5. Cuvette or receiving vessel for liquid or gaseous media for spectroscopic, qualitative and/or quantitative analysis or measurement, having a measuring region or measuring gap (2) made of plastics and penetrable by radiation, produced by a method according to claim 1, or with a device according to claims 2 to 4, **characterised in that** the thickness of the measuring gap (2) in the direction of radiation is approximately one millimetre plus or minus tolerances, or less.

6. Cuvette according to claim 5, **characterised in that** the measuring gap (2) has a shape that tapers towards an end (4) remote from the opening (3) and the cross-sectional thickness ranges from about 1.05 millimetres or about 1.03 millimetres to about 0.95 millimetres or 0.96 millimetres or has an intermediate value plus or minus a tolerance of about five hundredths of a millimetre or about half a millimetre and decreases from about 0.52 millimetres or 0.517 millimetres to 0.45 millimetres with a tolerance of two and a half hundredths of a millimetre.

7. Cuvette according to one of the preceding claims, **characterised in that**, in order to designate different gap widths of the measuring gap (2), different numbers and/or differently shaped geometric symbols, scores, notches, recesses or cut-outs (7) are provided on a wall (5), on a flange or edge, for distinguishing the different sizes of cuvettes (1).

8. Cuvette according to one of claims 5 to 7, **characterised in that** the height of the cuvette (1) at its centre is one-half to three centimetres, particularly three-quarters of a centimetre to two and a half centimetres, preferably eight millimetres to two centimetres.

## Revendications

1. Procédé de fabrication par injection d'une cuvette (1) ou d'un récipient collecteur en matière plastique pour des fluides liquides ou gazeux, destiné(e) à la mesure ou à l'analyse qualitative et/ou quantitative spectroscopique et pourvu(e) d'une zone de mesure ou d'une fente de mesure (2) pouvant être traversée par un rayonnement, sachant qu'un moule d'injection (10) en plusieurs parties, qui présente à l'intérieur le contour de la cuvette (1) ou du récipient collecteur avec leur ouverture (3) et la fente de mesure (2), est rempli dans une presse d'injection de la matière plastique initialement liquide, et sachant qu'après solidification de la matière plastique, le moule d'injection (10) est ouvert et la cuvette est enlevée, sachant que la cavité longitudinale intérieure (9) et la fente de mesure (2) sont formées et délimitées sur le côté intérieur dans le moule d'injection (10) par un noyau profilé (11) qui, pendant l'opération d'injection, est initialement maintenu par un support (14), **caractérisé en ce que** l'épaisseur du noyau profilé (11) dans la région (11a) de la fente de mesure (2) est limitée à 1 millimètre ou moins, **en ce que** le noyau profilé (11) est maintenu par le support (14) à son extrémité présentant la plus petite dimension et **en ce que** la terminaison de la fente de mesure (2) qui est opposée à l'ouverture (3) du récipient ou de la cuvette (1) est formée par le fait que le support (14) est retiré en éloignement du noyau profilé (11) pendant l'opération d'injection, sachant que le support (14) forme conjointement avec l'extrémité (11b) du noyau profilé (11) la délimitation ou continuation inférieure des parois (6) de la fente de mesure (2) à l'extrémité (4) de celle-ci, et **en ce que** l'opération d'injection est poursuivi lors du retrait du support (14) ou après ce retrait jusqu'au remplissage de l'espace creux ainsi dégagé, sachant que le support (14) pour le noyau profilé (11) formant la fente de mesure (2) est retiré dans la direction de développement de la fente de mesure (2) transversalement à l'orientation ultérieure du rayonnement, et **en ce que** le support (14), disposé sous la forme d'une étroite entretoise entre les parties de moule (12, 13) formant le côté extérieur du récipient ou de la cuvette (1), est retiré en éloignement du noyau profilé (11) dans la zone de séparation des deux parties de moule (12, 13), à la suite de quoi l'opération d'injection est achevée.

2. Dispositif de fabrication par injection d'une cuvette (1) ou d'un récipient collecteur en matière plastique pour des fluides liquides ou gazeux, destiné(e) à la mesure ou à l'analyse qualitative et/ou quantitative spectroscopique et pourvu(e) d'une zone de mesure ou d'une fente de mesure pouvant être traversée par un rayonnement, sachant qu'il est prévu un moule d'injection en plusieurs parties, que le contour extérieur (AK) de la cuvette (1) est disposé entre deux parties de moule (12, 13) et que le contour intérieur est formé par un noyau profilé (11), lequel est disposé entre les deux parties de moule (12, 13) et possède une étroite zone (11a) se trouvant à l'intérieur du moule d'injection (10) et destinée à former la fente de mesure (2), **caractérisé en ce que** le noyau profilé (11) possède une épaisseur de section d'un millimètre ou moins, plus ou moins des tolérances, et **en ce qu'**au moins un support (14) de l'étroite extrémité libre (11b) du noyau profilé (11) est disposé à l'intérieur du moule d'injection (10) avec possibilité de retrait par rapport au noyau profilé (11) dans la direction de développement de la partie étroite (11a) du noyau profilé (11), support qui, pendant le remplissage du moule d'injection (10), peut être retiré notamment d'un montant égal à l'épaisseur de paroi de la délimitation de l'extrémité intérieure ou inférieure de la fente de mesure (2), ou à moins, et **en ce que** le support (14) est réalisé sous la forme d'une entretoise du genre noyau entre les parties de moule (12, 13) et remplit un espacement entre ces parties de moule (12, 13) qui est voisin de l'espacement (16) dans lequel s'engage le noyau profilé (11) en position d'utilisation, et **en ce que** le ou les supports (14) du noyau profilé (11) présentent, à leur extrémité de soutien (14a), un renfoncement (17) concave ou en forme de rainure ou de goulotte qui, lors de l'action de soutien, reçoit ou entoure en engagement positif le bord, donc l'extrémité (11b) du noyau profilé (11), et qui forme le contour extérieur de la paroi de délimitation de la fente de mesure (2) à l'extrémité intérieure ou inférieure (4) de cette dernière.

3. Dispositif selon la revendication 2, **caractérisé en ce que** l'épaisseur du support (14) est inférieure, d'une fraction de l'épaisseur des parois (6) délimitant la fente de mesure (2), à l'espacement des parties de moule (12, 13) formant les côtés extérieurs des parois (6) de la fente de mesure (2).

4. Dispositif selon la revendication 2 ou 3, **caractérisé en ce que** l'épaisseur du support (14) est inférieure, de deux demi-épaisseurs de paroi des parois (6) délimitant la fente de mesure (2), à l'épaisseur totale de la fente de mesure (2) avec ses parois (6), et **en ce que** le milieu longitudinal du support (14) coïncide ou est aligné avec celui du noyau profilé (11) et donc avec le milieu longitudinal de la fente de mesure (2).

5. Cuvette ou récipient collecteur pour des fluides liquides ou gazeux, destiné(e) à la mesure ou à l'analyse qualitative et/ou quantitative spectroscopique et pourvu(e) d'une zone de mesure ou d'une fente de mesure (2) pouvant être traversée par un rayonnement, et fabriquée en matière plastique au moyen d'un procédé selon la revendication 1 ou d'un dispositif selon l'une des revendications 2 à 4, **caractérisée en ce que** l'épaisseur de la fente de mesure (2) dans la direction de rayonnement est égale à environ un millimètre plus ou moins des tolérances, ou moins.

6. Cuvette selon la revendication 5, **caractérisée en ce que** la fente de mesure (2) possède une forme allant en se rétrécissant en direction d'une extrémité (4) opposée à l'ouverture (3), et l'épaisseur de section diminue d'environ 1,05 millimètre ou environ 1,03 millimètre à environ 0,95 mm ou 0,96 mm ou une valeur intermédiaire respective, plus ou moins une tolérance d'environ cinq centièmes de millimètre, ou est égale à environ un demi-millimètre et diminue d'environ 0,52 millimètre ou 0,517 millimètre à 0,45 millimètre avec une tolérance de 2,5 centièmes de millimètre.

7. Cuvette selon l'une des revendications précédentes, **caractérisée en ce que** des signes géométriques, des entailles, des encoches, des échancrures ou des évidements (7) sont prévus en nombres différents et/ou de formes différentes sur une paroi (5), une bride ou un bord afin d'identifier des largeurs différentes de la fente de mesure (2), pour différencier des cuvettes (1) de différentes tailles.

8. Cuvette selon l'une des revendications 5 à 7, **caractérisée en ce que** la hauteur centrale de la cuvette (1) est d'un demi-centimètre à trois centimètres, en particulier de trois-quarts de centimètre à deux centimètres et demi, de préférence de huit millimètres à deux centimètres.
